(19) Europäisches Patentamt
European Patent Office
Office européen des brevets

(11) **EP 2 097 870 B1**

## (12) FASCICULE DE BREVET EUROPEEN

(45) Date de publication et mention
de la délivrance du brevet:
**02.06.2010 Bulletin 2010/22**

(21) Numéro de dépôt: **07858758.1**

(22) Date de dépôt: **30.11.2007**

(51) Int Cl.:
**G06T 5/50** *(2006.01)*     **G01J 1/44** *(2006.01)*

(86) Numéro de dépôt international:
**PCT/FR2007/052425**

(87) Numéro de publication internationale:
**WO 2008/068443 (12.06.2008 Gazette 2008/24)**

(54) **PROCEDE ET INSTALLATION D'IMAGERIE**

VERFAHREN UND EINRICHTUNG ZUR BILDGEBUNG

METHOD AND ARRANGEMENT FOR IMAGING

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.12.2006 FR 0610576**

(43) Date de publication de la demande:
**09.09.2009 Bulletin 2009/37**

(73) Titulaire: **Biospace Lab**
**75019 Paris (FR)**

(72) Inventeurs:
• **MAITREJEAN, Serge**
**75020 Paris (FR)**
• **LEVREY, Olivier**
**77500 Chelles (FR)**
• **DESAUTE, Pascal**
**75020 Paris (FR)**

(74) Mandataire: **Cabinet Plasseraud**
**52, rue de la Victoire**
**75440 Paris Cedex 09 (FR)**

(56) Documents cités:
**US-A- 5 828 067**

• GAL O ET AL: "Functioning of the CARTOGAM portable gamma camera in a photon counting mode" NUCLEAR SCIENCE SYMPOSIUM CONFERENCE RECORD, 2000 IEEE LYON, FRANCE 15-20 OCT. 2000, PISCATAWAY, NJ, USA,IEEE, US, vol. 1, 15 octobre 2000 (2000-10-15), pages 6-308, XP010556575 ISBN: 0-7803-6503-8
• HILL J.E ET AL.: "Readout Modes and Automated Operation of the Swift X-Ray Telescope" PROC. SPIE, vol. 5165, février 2004 (2004-02), pages 217-231, XP002429211 SPIE, Bellingham, WA, DOI: 10.1117/12.505728 ISSN: 0277-786X
• KRAFT E ET AL: "Counting and Integrating Readout for Direct Conversion X-Ray Imaging - Concept, Realization and First Prototype Measurements" NUCLEAR SCIENCE SYMPOSIUM CONFERENCE RECORD, 2005 IEEE WYNDHAM EL CONQUISTADOR RESORT, PUERTO RICO OCTOBER 23 - 29, 2005, PISCATAWAY, NJ, USA,IEEE, 23 octobre 2005 (2005-10-23), pages 2761-2765, XP010896238 ISBN: 0-7803-9221-3

EP 2 097 870 B1

**Description**

La présente invention est relative aux procédés et installations d'imagerie.

Le document GB 2 350 187 décrit un exemple d'un procédé dans lequel, lors la détection d'un signal, on vérifie si la détection correspond plutôt à un mode de comptage, ou à un mode d'intégration, et dans lequel, en fonction de cette détermination, on obtient une valeur estimée du signal correspondant soit au signal de comptage, soit au signal d'intégration, voire à une combinaison de ces deux signaux. L'intérêt d'un tel procédé est en particulier de pouvoir améliorer l'échelle dynamique de détection.

Toutefois, la mesure décrite dans ce document est obtenue à partir d'un photomultiplicateur, de sorte qu'il s'agit d'une approche mono-pixel, pour laquelle on cherche à connaître le niveau de détection, mais pas l'emplacement d'origine du signal. Il existe donc un besoin d'un procédé d'imagerie à bonne échelle dynamique de détection, permettant de fournir en plus une image de la détection.

A cet effet, l'invention se rapporte principalement à un procédé d'imagerie comprenant les étapes suivante :

(a) on fournit pour chacune d'un ensemble de zones (x ; y) à observer d'une région d'observation, et pour un instant $\delta t$ d'une période d'observation T, une mesure $F_0(x, y, \delta t)$ des signaux détectés correspondant à une émission de rayonnement en provenance de ladite zone pendant l'instant $\delta t$,

(b) on fournit d'une part une première valeur $F_1(x, y, \delta 1)$, dite d' « intégration », estimative de l'intensité des signaux détectés en provenance de ladite zone pendant l'instant, et d'autre part une deuxième valeur $F_2(x, y, \delta t)$ dite « de comptage », estimative du nombre de signaux détectés en provenance de ladite zone pendant l'instant, $F_2(x, y, \delta t)$ étant obtenue en affectant, pour un ensemble de zones contiguës où la mesure $F_0(x, y, \delta t)$ est non nulle formant une tache de détection :

- une unité de signal au barycentre de ladite tache, et
- zéro unité de signal aux autres zones de la tache,

(c) en au moins une zone considérée $(x_0 ; y_0)$ dudit ensemble de zones, on estime une valeur $F_e(x_0, y_0, \delta t)$ du nombre de signaux en la zone considérée $(x_0 ; y_0)$ pendant ledit instant à partir d'au moins une combinaison des première $F_1(x_0, y_0, \delta t)$ et deuxième $F_2(x_0, y_0, \delta t)$ valeurs,

dans lequel, au cours de l'étape (c), on met en oeuvre les étapes suivantes :

(c1) on définit un voisinage $R(x_0 ; y_0)$ formant une partie dudit ensemble de zones, ledit voisinage comprenant au moins la zone considérée $(x_0 ; y_0)$ et des zones voisines $(x1 ; y1)$ distinctes de la zone considérée,

(c2) on estime un critère de détection dans le voisinage, indiquant un niveau de détection, à partir des mesures $F_0(x, y, \delta t)$ pour des zones voisines $(x, y)$ comprises dans ledit voisinage $R(x_0 ; y_0)$ au cours de la période d'observation T, et

(c3) on estime la valeur $F_e(x_0, y_0, \delta t)$ du nombre de signaux en fonction en outre au moins dudit critère de détection dans 1e voisinage.

Grâce à ces dispositions, on obtient un procédé qui est bien adapté à la détection multi-pixels. En particulier, l'estimation de la valeur $F_e$ du nombre de signaux est obtenue en prenant en compte la détection dans le voisinage spatial et/ou temporel du pixel considéré.

Dans des modes de réalisation préférés de l'invention, on peut éventuellement avoir recours en outre à l'une et/ou à l'autre des dispositions suivante :

- lorsque le critère de détection dans le voisinage indique un niveau de détection bas, on estime la valeur $F_e(x_0, y_0, \delta t)$ du nombre de signaux comme la deuxième valeur $F_2(x_0, y_0, \delta t)$ ;
- lorsque le critère de détection dans le voisinage indique un niveau de détection élevé, on estime la valeur $F_e(x0, y0, \delta t)$ du nombre de signaux comme la première valeur $F_1(x_0, y_0, \delta t)$ ;
- lorsque le critère de détection dans le voisinage indique un niveau de détection intermédiaire entre les niveaux bas et élevé, on estime la valeur $F_e(x_0, y_0, \delta t)$ du nombre de signaux comme une combinaison de la première valeur $F_1(x_0, y_0, \delta t)$ et la deuxième valeur $F_2(x_0, y_0, \delta t)$ chacune étant pondérée par un coefficient non nul;
- lorsque le critère de détection dans le voisinage indique ledit niveau de détection intermédiaire, on estime la valeur $F_e(x_0, y_0, \delta t)$ du nombre de signaux comme une combinaison linéaire de la première valeur $F_1(x_0, y_0, \delta t)$ et la deuxième valeur $F_2(x_0, y_0, \delta t)$ selon :

$$F_e(x_0, y_0, \delta t) = \alpha F_1(x_0, y_0, \delta t) + (1 - \alpha) F_2(x_0, y_0, \delta t),$$

$\alpha$ étant un coefficient compris dans l'intervalle ]0;1[ dépendant du critère de détection dans le voisinage ;

- pour la zone $(x_0, y_0)$ et l'instant $\delta t$ considérés, $\alpha$ dépend de la mesure $F_0(x_0, y_0, \delta t)$ en cette zone pour cet instant ;
- au cours de l'étape (c2), on estime le critère de détection dans le voisinage à partir au moins des mesures $F_0(x, y, \delta t)$ pour des zones voisines $(x_1 ; y_1)$ comprises dans ledit voisinage $R(x_0 ; y_0)$ au cours de l'instant $\delta t$ ;
- le critère de détection est relatif à un nombre de zones $(x_1 ; y_1)$ dudit voisinage dans lesquelles la mesure $F_0(x, y, \delta t)$ est inférieure à un seuil prédéterminé ;
- le critère est relatif à une moyenne de la mesure $F_0(x, y, \delta t)$ dans ledit voisinage ;
- les étapes (a), (b) et (c) sont mises en oeuvre au moins pour un premier instant $\delta t_1$ et un deuxième instant $\delta t_2$ distinct du premier instant, et on estime pour ledit premier instant ledit critère de détection dans le voisinage au moins à partir des mesures $F_0(x, y, \delta t_2)$ pour des zones voisines $(x_1 ; y_1)$ comprises dans ledit voisinage $R(x_0 ; y_0)$ au cours du deuxième instant $\delta t_2$ ;
- l'étape (c) est mise en oeuvre en une pluralité de zones considérées ;
- au cours de l'étape (b), on obtient ladite première valeur $F_1(x, y, \delta t)$ en fonction de ladite mesure $F_0(x, y, \delta t)$ ;
- avant l'étape (a), on met en oeuvre une étape (z) au cours de laquelle on détecte pour chacune d'un ensemble de zones $(x ; y)$ à observer d'une région d'observation, et pour un instant $\delta t$ d'une période d'observation, un signal correspondant à une émission de rayonnement en provenance de ladite zone pendant l'instant $\delta t$, ladite détection fournissant ladite mesure $F_0(x, y, \delta t)$ ;
- au cours de l'étape (z), on détecte pour chacune dudit ensemble de zones $(x ; y)$ à observer, et pour ledit instant $\delta t$, un signal correspondant à une émission de rayonnement lumineux en provenance de ladite zone pendant l'instant $\delta t$ ;
- au cours de l'étape (c2), on estime ledit critère de détection dans le voisinage à partir en outre de la mesure $F_0(x_0, y_0, \delta t)$ pour la zone considérée $(x_0, y_0)$.

Selon un autre aspect, l'invention se rapporte à un produit programme d'ordinateur comprenant des portions de code de programmes adaptées pour mettre en oeuvre un tel procédé lorsque ledit programme est exécuté sur une machine programmable.

Selon un autre aspect, l'invention se rapporte à une installation d'imagerie comprenant :

(A) une mémoire stockant, pour chacune d'un ensemble de zones $(x ; y)$ à observer d'une région d'observation, et pour un instant $\delta t$ d'une période d'observation, une mesure $F_0(x, y, \delta t)$ de signaux détectés correspondant à une émission de rayonnement en provenance de ladite zone pendant l'instant $\delta t$,
(B) un calculateur adapté pour fournir d'une part une première valeur $F_1(x, y, \delta t)$ dite d' « intégration » estimative de l'intensité des signaux détectés en provenance de ladite zone pendant l'instant, et d'autre part une deuxième valeur $F_2(x, y, \delta t)$ dite « de comptage » estimative du nombre de signaux détectés en provenance de ladite zone pendant l'instant, $F_2(x, y, \delta t)$ étant obtenue en affectant, pour un ensemble de zones contiguës où la mesure $F_0(x, y, \delta t)$ est non nulle formant une tache de détection :

- une unité de signal au barycentre de ladite tache, et
- zéro unité de signal aux autres zones de la tache,

ledit calculateur étant adapté pour estimer, en au moins une zone considérée $(x_0 ; y_0)$ choisie dans ledit ensemble de zones, une valeur $F_e(x_0, y_0, \delta t)$ du nombre de signaux en la zone considérée $(x_0 ; y_0)$ pendant ledit instant à partir d'au moins une combinaison des première $F_1(x_0, y_0, \delta t)$ et deuxième $F_2(x_0, y_0, \delta t)$ valeurs, le calculateur étant adapté pour définir un voisinage $R(x_0 ; y_0)$ formant une partie dudit ensemble de zones, ledit voisinage comprenant au moins la zone considérée $(x_0 ; y_0)$ et des zones voisines $(x_1 ; y_1)$ distinctes de la zone considérée, le calculateur étant adapté pour estimer un critère de détection dans le voisinage, indiquant un niveau de détection, au moins à partir des mesures $F_0(x, y, \delta t)$ pour des zones voisines $(x_1 ; y_1)$ comprises dans ledit voisinage $R(x_0 ; y_0)$ au cours de la période d'observation T, et le calculateur étant adapté pour estimer la valeur $F_e(x_0, y_0, \delta t)$ du nombre de signaux en fonction en outre au moins dudit critère de détection dans le voisinage.

Dans certains modes de réalisation, on peut en outre prévoir :

- une unité de détection adaptée pour détecter des signaux correspondants à une émission de rayonnement en provenance de ladite zone pendant l'instant $\delta t$, et pour stocker la mesure correspondante $F_0(x, y, \delta t)$ dans ladite

mémoire ;

- l'unité de détection est adaptée pour détecter des signaux optiques.

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 représente schématiquement une installation d'imagerie,
- la figure 2 représente schématiquement un exemple d'obtention des valeurs $F_1(x, y, \delta t)$ et $F_2(x, y, \delta t)$,
- la figure 3 représente schématiquement une étape d'obtention de $F_e(x_0, y_0, \delta t)$, et
- les figures 4a et 4b sont des graphes présentant deux variantes possibles pour $\alpha(C)$.

Sur les différentes figures, les mêmes références désignent des éléments identiques ou similaires.

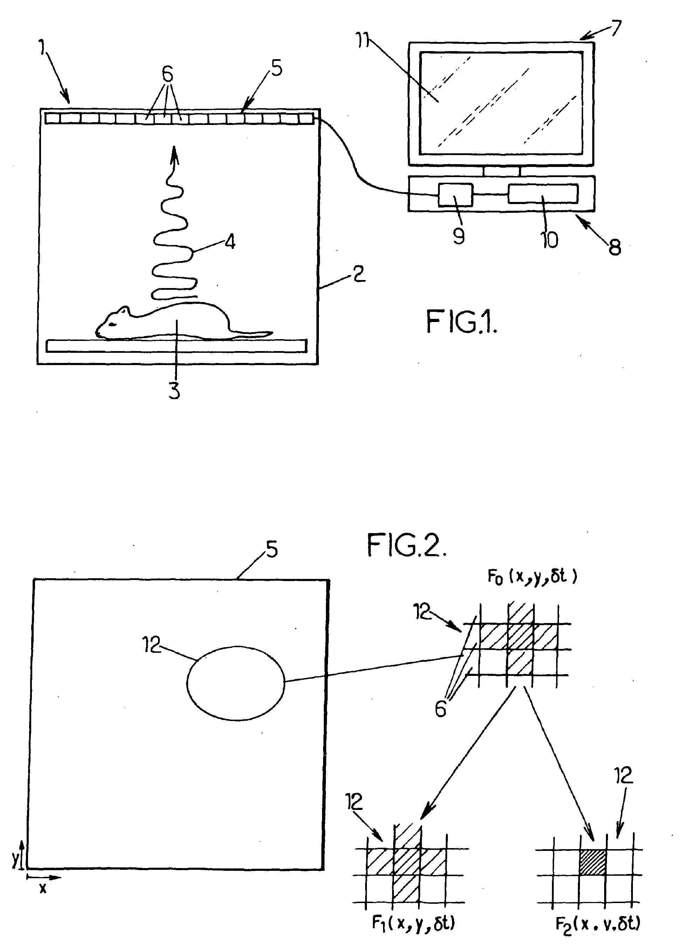

La figure 1 représente schématiquement une installation 1 d'imagerie comprenant une enceinte dans laquelle est disposé un échantillon 3 à imager. L'échantillon 3 émet un rayonnement 4 détecté et éventuellement amplifié par un détecteur ou capteur 5 spécialement adapté pour détecter le rayonnement 4. Le détecteur 5 comprend une pluralité de cellules 6 arrangées classiquement en lignes et en colonnes (une seule ligne visible sur la figure 1) dans le plan perpendiculaire au plan de la figure 1. Le détecteur 5 est relié en sortie à un système informatique 7 comprenant une unité centrale 8 comprenant une mémoire 9 dans laquelle sont stockées les mesures obtenues par le détecteur 5, et une unité de traitement 10 programmée pour traiter les données stockées dans la mémoire 9 de la manière explicitée par la suite. Le système informatique 7 peut également comporter un écran 11 permettant d'afficher à un utilisateur le signal détecté et/ou le résultat du traitement par l'unité de traitement 10, ou autre.

A titre d'exemple purement illustratif, on a représenté sur la figure 1 une expérience de détection en luminescence au cours de laquelle on détecte un rayonnement lumineux 4 émis depuis l'intérieur d'un animal 3, par exemple une souris modifiée génétiquement, disposée dans une boite noire parfaitement opaque à la lumière extérieure. Ce signal lumineux est par exemple représentatif d'une réaction chimique se produisant dans l'animal et peut servir de traceur pour une telle réaction chimique. Le rayonnement 4 peut également servir à quantifier l'expression d'un gène donné porté par l'animal 3 et qui, lorsqu'il s'exprime, occasionne la réaction chimique mentionnée précédemment.

Pour mesurer un tel rayonnement, on utilise à titre de détecteur 5 une caméra CCD refroidie, un ICCD, un EMCCD, (CCD à multiplication interne) ou autre présentant par exemple environ un (ou plusieurs) million de cellules de détection 6 disposées en mille colonnes de mille rangées.

L'observation est effectuée pendant une période d'observation T, par exemple de quelques minutes, ou de plusieurs heures, subdivisée en instants d'observation $\delta t_1$, $\delta t_2$,..., $\delta t_i$, ,$\delta t_n$ , pendant chacun desquels une mesure $F_0(x, y, \delta t_1)$ est obtenue pour chacune des cellules 6, repérée par ses coordonnées (x, y) dans le plan de détection du détecteur 5 par rapport à une origine prédéterminée, et stockée dans la mémoire 9 du système informatique 7.

La figure 2 représente à gauche, le plan du détecteur 5, et à droite en haut une portion agrandie du signal mesuré dans une région 12 de 20 cellules de détection. En bas de la figure 2, sont représentés schématiquement des première $F_1$ et deuxième $F_2$ valeurs obtenues à partir de la mesure $F_0$ tel qu'explicité par la suite.

Comme représenté sur la figure 2, la détection d'un évènement, correspondant à l'émission d'un rayonnement 4 unique de l'échantillon 3 peut être détectée simultanément par plusieurs cellules de détection 6 au cours d'un instant $\delta t$ donné. Par exemple, une cellule donnée représentée au centre de la région agrandie 12 sur la figure 2 étant la plus proche de l'emplacement effectif de l'émission du rayonnement 4 correspondra à une mesure maximale, schématisée par une assez forte densité de hachures sur la représentation de la mesure $F_0$ de la figure 2. Les cellules avoisinantes pourront toutefois avoir détecté une partie de cet unique rayonnement, de sorte qu'une mesure $F_0$ non nulle est également mémorisée pour ces cellules, comme représenté par les hachures de faible densité sur la représentation de la mesure $F_0$ sur la figure 2. Le détecteur 5 présentant par ailleurs un certain seuil de détection, la mesure $F_0$ pour les cellules (x, y) dans lesquelles ce seuil n'a pas été atteint est stockée égale à zéro dans la mémoire 9. Ces cellules sont représentées en blanc sur la représentation de la mesure $F_0$ sur la figure 2.

Pour chaque pixel repéré par ses coordonnées (x, y), la mesure $F_0$ stockée dans la mémoire 9 correspond donc à zéro si un signal trop faible a été détecté, pendant l'instant $\delta t$, ou à une mesure non nulle pouvant correspondre à une partie d'un ou de plusieurs rayonnements ayant eu lieu à proximité du pixel considéré.

Une fois les mesures $F_0(x, y, \delta t)$ stockées dans la mémoire 9 pour l'ensemble des instants $\delta t$ de la période d'observation T, on obtient pour chaque instant $\delta t$ une image dite « de comptage » $F_2$ estimative du nombre d'évènements de rayonnement émis en la zone considérée, pendant l'instant $\delta t$. Par exemple, pour chaque tache de détection, correspondant à un ensemble de pixels contigus de mesures $F_0$ non nulles, on identifie le barycentre de cette tache, et on lui assigne une valeur dite « de comptage », correspondant sensiblement à une unité de signal, par exemple normalisée. On assigne la valeur $F_2 = 0$ aux autres pixels de la tache de détection considérée. La valeur « de comptage » $F_2$ peut également être corrigée si l'on connaît expérimentalement ou statistiquement la relation pour le détecteur entre le comptage calculé comme explicité ci-dessus et le nombre de rayonnement effectivement émis dans la zone considérée donnant ce comptage calculé. Statistiquement, on peut en effet savoir à l'avance que pour un nombre $N_0$ de rayonnement émis pendant un instant $\delta t$ en une zone donnée, seul un nombre inférieur $N_1$, dépendant de $N_0$, sera mesuré.

Une image, dite image « de comptage » obtenue à partir des valeurs $F_2$, fournit une très bonne résolution. De plus, il est connu que le comptage fournit des données statistiquement optimum, indépendantes de toute source de fluctuations dues au capteur. Toutefois, une telle image peut s'avérer trop fausse pour la qualité des résultats recherchés lorsque de trop nombreux signaux proches sont émis pendant un même instant $\delta t$, rendant difficile de discerner les évènements individuels. En effet, dans les cas où de nombreux rayonnements sont détectés, pendant l'instant $\delta t$, dans une même zone du détecteur 5, les taches associées à chaque rayonnement individuel se superposent de sorte qu'il n'est plus possible de distinguer, pendant l'instant $\delta t$, les évènements individuels.

Dans ce dernier cas, on peut préférer une image de valeur $F_1$ dite « d'intégration » correspondant sensiblement, pour chaque pixel de coordonnée (x, y) à la quantité (intensité) de signal détecté pendant l'instant $\delta t$ en ce pixel. Dans l'exemple présenté, $F_1$ est par exemple directement égal à $F_0$ pour chaque pixel considéré. Une telle image présente une plus mauvaise résolution que l'image « de comptage », mais présente l'avantage de fournir une valeur plus juste de la quantité incidente sur le capteur, en particulier lors de fortes détections.

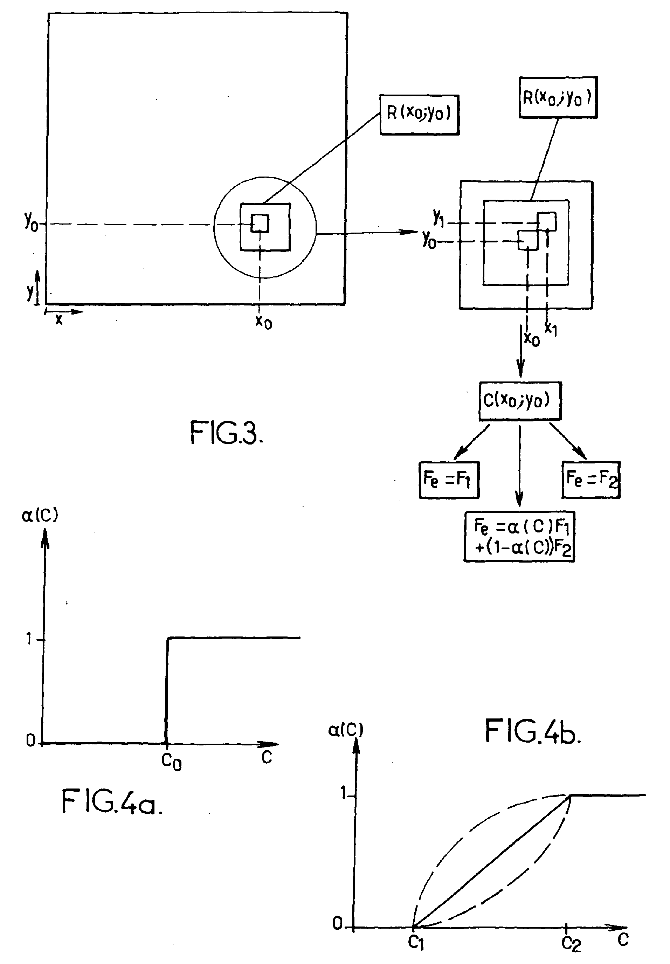

Une fois le calcul des valeurs $F_1$ et $F_2$ effectué par l'unité de traitement 10 pour chaque pixel de coordonnées (x, y) et pour chaque instant $\delta t$, et le résultat mémorisé dans la mémoire 9, l'unité de traitement 10 applique le traitement représenté schématiquement sur la figure 3.

On considère un pixel considéré de coordonnée ($x_0$ ; $y_0$). Par exemple, on considère tour à tour l'ensemble des pixels correspondant chacun à une cellule 6 du détecteur 5. En alternative, on considère uniquement les pixels pour lesquels la valeur $F_2(x_0, y_0, \delta t)$ est non nulle.

Pour le pixel considéré, de coordonnées ($x_0$ ; $y_0$), on définit un voisinage $R(x_0, y_0)$, constitué des quelques pixels, par exemple 25, ou 100 pixels, entourant le pixel considéré de coordonnées ($x_0$ ; $y_0$).

On détermine un critère $C(x_0$ ; $y_0)$, relatif au niveau détection au voisinage $R(x_0$ ; $y_0)$ du pixel considéré de coordonnées ($x_0$ ; $y_0$). Le critère $C(x_0$ ; $y_0)$ indique si, dans le voisinage $R(x_0$ ; $y_0)$ du pixel considéré, la détection est plutôt de haut niveau ou de bas niveau. $C(x_0$ ; $y_0)$ varie évidemment selon le pixel considéré, et l'instant considéré.

Pour déterminer le critère $C(x_0, y_0)$, on utilise à titre d'exemple, la mesure $F_0$ obtenue pour les pixels de coordonnées ($x_1$ ; $y_1$) autres que celui considéré, compris dans le voisinage $R(x_0, y_0)$. On utilise soit directement la mesure $F_0$, ou toute autre valeur obtenue directement ou indirectement à partir de $F_0$, tel qu'en particulier $F_1$ ou $F_2$ en ces pixels.

Par exemple, on utilise à titre de critère $C(x_0, y_0)$ la proportion de pixels du voisinage $R(x_0, y_0)$ pour lesquels la mesure $F_0(x_1, y_1)$ est nulle, ou inférieure à un seuil prédéterminé, pour l'instant $\delta t$ considéré.

Si un grand nombre de pixels du voisinage présente une mesure $F_0$ nulle, en d'autres termes si on détecte qu'on est dans un cas de faible détection autour du pixel considéré, on décidera de donner à la valeur $F_e(x_0, y_0, \delta t)$ du nombre de signaux une valeur dans laquelle la valeur de comptage $F_2(x_0, y_0, \delta t)$ du nombre de signaux sera prépondérante. En effet, comme expliqué précédemment, $F_2$ est préférable dans les régions de faible détection.

Si on détecte que le nombre de pixels voisins à mesure nulle est inférieur à une valeur prédéterminée, à savoir qu'on est dans un cas de forte détection autour du pixel considéré ($x_0, y_0$), on choisira, pour la valeur $F_e(x_0, y_0, \delta t)$ du nombre de signaux détectés une valeur dans laquelle la valeur d'intégration $F_1(x_0, y_0, \delta t)$ sera prépondérante. En effet, comme expliqué précédemment, $F_1$ est préférable dans les régions de forte détection.

En tout état de cause, on pourrait écrire $F_e$ comme une combinaison de $F_1$ et de $F_2$, par exemple une combinaison linéaire telle que :

$F_e(x_0, y_0, \delta t) = \alpha\, F_1(x_0, y_0, \delta t) + (1-\alpha)\, F_2(x_0, y_0, \delta t)$, où la fonction $\alpha$ du critère $C(x_0, y_0)$ peut être comprise entre 0 et 1 en étant par exemple constante par morceau telle que représentée sur la figure 4a, auquel cas la valeur $F_e$ du nombre de signaux sera égale soit à $F_1$ soit à $F_2$ selon la valeur du critère C par rapport à une valeur prédéterminée $C_0$ du critère C. En variante, comme représenté sur la figure 4b, la fonction $\alpha(C)$ peut comporter une portion croissante, par exemple continue (en pointillés), par exemple linéaire (en traits pleins), entre deux valeurs prédéterminées $C_1$ et $C_2$ du critère. Dans la portion intermédiaire comprise entre les valeurs $C_1$ et $C_2$ du critère, $\alpha$ est compris dans l'intervalle $]0\,;1[$. On notera que le paramètre $\alpha$ dépend du critère C en ($x_0, y_0$) et dépend par conséquent directement ou indirectement de la mesure $F_0$ en ($x_0, y_0$) ou/et au voisinage de ($x_0, y_0$).

D'autres critères que le nombre de pixels présentant une mesure inférieure à un seuil prédéterminé dans le voisinage $R(x_0, y_0)$ peuvent être utilisés.

A titre d'exemple, on peut par exemple prévoir que le critère correspondra à la moyenne de la mesure $F_0(x, y, \delta t)$ sur l'ensemble des pixels de coordonnées (x ; y) du voisinage $R(x_0, y_0)$ pendant l'instant $\delta t$.

Selon une autre variante, le critère $C(x_0, y_0)$ peut également dépendre du temps.

Dans ce cas, le critère, qui peut par exemple être l'un des deux critères précédemment décrit, est estimé non seulement pour l'instant $\delta t_i$ pour lequel le calcul $F_e(x_0, y_0, \delta t_i)$ est en cours, mais également pour les instants $\delta t_{i-j}$

précédents et $\delta t_{i+k}$ suivants dans un voisinage temporel de l'instant considéré. L'utilisation d'un tel critère temporel peut permettre de détecter que, pour l'instant $\delta t_i$ considéré, un rayonnement parasite de type cosmique ou autre a été également capté par le détecteur 5. La comparaison de la mesure dans le voisinage du pixel considéré, de coordonnées $(x_0 ; y_0)$ pour l'instant $\delta t_i$ avec les mesures dans ce même voisinage en des instants proches va permettre de déterminer si la mesure à l'instant $\delta t_i$ inclut la mesure de ce rayonnement cosmique, et le calcul d'une valeur estimée $F_e(x_0, y_0, \delta t_i)$ affranchie de ce rayonnement.

Le procédé de traitement ici décrit en relation avec la figure 3 pourrait également s'appliquer à un signal obtenu par détection de tout autre type de rayonnement que des rayonnements lumineux, tel que présenté ici.

## Revendications

1. Procédé d'imagerie comprenant les étapes suivante :

   (a) on fournit pour chacune d'un ensemble de zones $(x ; y)$ à observer d'une région d'observation, et pour un instant $\delta t$ d'une période d'observation T, une mesure $F_0(x, y, \delta t)$ des signaux (4) détectés correspondant à une émission de rayonnement en provenance de ladite zone pendant l'instant $\delta t$,

   (b) on fournit d'une part une première valeur $F_1(x, y, \delta t)$, dite d' « intégration », estimative de l'intensité des signaux détectés en provenance de ladite zone pendant l'instant, et d'autre part une deuxième valeur $F_2(x, y, \delta t)$ dite « de comptage », estimative du nombre de signaux détectés en provenance de ladite zone pendant l'instant, $F_2(x, y, \delta t)$ étant obtenue en affectant, pour un ensemble de zones contiguës où la mesure $F_0(x, y, \delta t)$ est non nulle formant une tache de détection :

   - une unité de signal au barycentre de ladite tache, et
   - zéro unité de signal aux autres zones de la tache,

   (c) en au moins une zone considérée $(x_0 ; y_0)$ dudit ensemble de zones, on estime une valeur $F_e(x_0, y_0, \delta t)$ du nombre de signaux en la zone considérée $(x_0 ; y_0)$ pendant ledit instant à partir d'au moins une combinaison des première $F_1(x_0, y_0, \delta t)$ et deuxième $F_2(x_0, y_0, \delta t)$ valeurs,

   dans lequel, au cours de l'étape (c), on met en oeuvre les étapes suivantes :

   (c1) on définit un voisinage $R(x_0 ; y_0)$ formant une partie dudit ensemble de zones, ledit voisinage comprenant au moins la zone considérée $(x_0 ; y_0)$ et des zones voisines $(x_1 ; y_1)$ distinctes de la zone considérée,

   (c2) on estime un critère de détection dans le voisinage, indiquant un niveau de détection, à partir des mesures $F_0(x, y, \delta t)$ pour des zones voisines $(x_1 ; y_1)$ comprises dans ledit voisinage $R(x_0 ; y_0)$ au cours de la période d'observation T, et

   (c3) on estime la valeur $F_e(x_0, y_0, \delta t)$ du nombre de signaux en fonction en outre au moins dudit critère de détection dans le voisinage.

2. Procédé d'imagerie selon la revendication 1, dans lequel:

   - lorsque le critère de détection dans le voisinage indique un niveau de détection bas, on estime la valeur $F_e(x_0, y_0, \delta t)$ du nombre de signaux comme la deuxième valeur $F_2(x_0, y_0, \delta t)$,

   - lorsque le critère de détection dans le voisinage indique un niveau de détection élevé, on estime la valeur $F_e(x_0, y_0, \delta t)$ du nombre de signaux comme la première valeur $F_1(x_0, y_0, \delta t)$.

3. Procédé d'imagerie selon la revendication 2, dans lequel, lorsque le critère de détection dans le voisinage indique un niveau de détection intermédiaire entre les niveaux bas et élevé, on estime la valeur $F_e(x_0, y_0, \delta t)$ du nombre de signaux comme une combinaison de la première valeur $F_1(x_0, y_0, \delta t)$ et la deuxième valeur $F_2(x_0, y_0, \delta t)$, chacune étant pondérée par un coefficient non nul.

4. Procédé d'imagerie selon la revendication 3 dans lequel, lorsque le critère de détection dans le voisinage indique ledit niveau de détection intermédiaire, on estime la valeur $F_e(x_0, y_0, \delta t)$ du nombre de signaux comme une combinaison linéaire de la première valeur $F_1(x_0, y_0, \delta t)$ et la deuxième valeur $F_2(x_0, y_0, \delta t)$ selon :

$$F_e(x_0,\ y_0,\ \delta t) = \alpha\ F_1(x_0,\ y_0,\ \delta t) + (1-\alpha)\ F_2(x_0,\ y_0,\ \delta t),$$

$\alpha$ étant un coefficient compris dans l'intervalle $]0\ ;1[$ dépendant du critère de détection dans le voisinage, et optionnellement dans lequel pour la zone $(x_0, y_0)$ et l'instant $\delta t$ considéré, $\alpha$ dépend de la mesure $F_0(x_0, y_0, \delta t)$ en cette zone pour cet instant.

**5.** Procédé selon l'une des revendications précédentes dans lequel au cours de l'étape (c2), on estime le critère de détection dans le voisinage à partir au moins de la mesure $F_0(x, y, \delta t)$ pour des zones voisines $(x_1\ ;y_1)$ comprises dans ledit voisinage $R(x_0\ ;y_0)$ au cours de l'instant $\delta t$.

**6.** Procédé d'imagerie selon la revendication 5 dans lequel le critère de détection est relatif à l'un des critères suivants :

- un nombre de zones $(x_1\ ;y_1)$ dudit voisinage dans lesquelles la mesure $F_0(x, y, \delta t)$ est inférieure à un seuil prédéterminé ;
- une moyenne de la mesure $F_0(x, y, \delta t)$ dans ledit voisinage.

**7.** Procédé d'imagerie selon l'une des revendications précédentes dans lequel les étapes (a), (b) et (c) sont mises en oeuvre au moins pour un premier instant $(\delta t_1)$ et un deuxième instant $(\delta t_2)$ distinct du premier instant, et dans lequel on estime pour ledit premier instant ledit critère de détection dans le voisinage au moins à partir des mesures $F_0(x, y, \delta t_2)$ pour des zones voisines $(x_1\ ;y_1)$ comprises dans ledit voisinage $R(x_0\ ;y_0)$ au cours du deuxième instant $(\delta t_2)$.

**8.** Procédé d'imagerie selon l'une des revendications précédentes dans lequel l'étape (c) est mise en oeuvre en une pluralité de zones considérées.

**9.** Procédé d'imagerie selon l'une des revendications précédentes dans lequel, au cours de l'étape (b), on obtient ladite première valeur $F_1(x, y, \delta t)$ en fonction de ladite mesure $F_0(x, y, \delta t)$.

**10.** Procédé d'imagerie selon l'une des revendications précédentes dans lequel, avant l'étape (a), on met en oeuvre une étape (z) au cours de laquelle on détecte pour chacune d'un ensemble de zones $(x\ ;y)$ à observer d'une région d'observation, et pour un instant $\delta t$ d'une période d'observation, un signal (4) correspondant à une émission de rayonnement, par exemple lumineux, en provenance de ladite zone pendant l'instant $\delta t$, ladite détection fournissant ladite mesure $F_0(x, y, \delta t)$.

**11.** Procédé selon l'une quelconques des revendications précédentes, dans lequel, au cours de l'étape (c2), on estime ledit critère de détection dans le voisinage à partir en outre de la mesure $F_0(x_0\ ;y_0, \delta t)$ pour la zone considérée $(x_0\ ;y_0)$.

**12.** Produit programme d'ordinateur comprenant des portions de code de programmes adaptées pour mettre en oeuvre un procédé selon l'une quelconque des revendications précédentes lorsque ledit programme est exécuté sur une machine programmable.

**13.** Installation d'imagerie comprenant :

(A) une mémoire (9) stockant, pour chacune d'un ensemble de zones $(x\ ;y)$ à observer d'une région d'observation, et pour un instant $\delta t$ d'une période d'observation, une mesure $F_0(x, y, \delta t)$ de signaux détectés correspondant à une émission de rayonnement en provenance de ladite zone pendant l'instant $\delta t$,
(B) un calculateur (10) adapté pour fournir d'une part une première valeur $F_1(x, y, \delta t)$ dite d' « intégration » estimative de l'intensité des signaux détectés en provenance de ladite zone pendant l'instant, et d'autre part une deuxième valeur $F_2(x, y, \delta t)$ dite « de comptage », estimative du nombre de signaux détectés en provenance de ladite zone pendant l'instant, $F_2(x, y, \delta t)$ étant obtenue en affectant, pour un ensemble de zones contiguës où la mesure $F_0(x, y, \delta t)$ est non nulle formant une tache de détection :

- une unité de signal au barycentre de ladite tache, et
- zéro unité de signal aux autres zones de la tache,

ledit calculateur (10) étant adapté pour estimer, en au moins une zone considérée $(x_0\ ;y_0)$ choisie dans ledit ensemble de zones, une valeur $F_e(x_0, y_0, \delta t)$ du nombre de signaux en la zone considérée $(x_0\ ;y_0)$ pendant ledit instant à partir d'au moins une combinaison des première $F_1(x_0, y_0, \delta t)$ et deuxième $F_2(x_0, y_0, \delta t)$ valeurs,

le calculateur (10) étant adapté pour définir un voisinage $R(x_0 ; y_0)$ formant une partie dudit ensemble de zones, ledit voisinage comprenant au moins la zone considérée $(x_0 ; y_0)$ et des zones voisines $(x_1 ; y_1)$ distinctes de la zone considérée,

le calculateur (10) étant adapté pour estimer un critère de détection dans le voisinage, indiquant un niveau de détection, au moins à partir des mesures $F_0(x, y, \delta t)$ pour des zones voisines $(x_1 ; y_1)$ comprises dans ledit voisinage $R(x_0 ; y_0)$ au cours de la période d'observation T, et

le calculateur (10) étant adapté pour estimer la valeur $F_e(x_0, y_0, \delta t)$ du nombre de signaux en fonction en outre au moins dudit critère de détection dans le voisinage.

**14.** Installation d'imagerie selon la revendication 13, comprenant en outre une unité de détection (5) adaptée pour détecter des signaux correspondants à une émission de rayonnement en provenance de ladite zone pendant l'instant $\delta t$, et pour stocker la mesure correspondante $F_0(x, y, \delta t)$ dans ladite mémoire (9).

**15.** Installation d'imagerie selon la revendication 14 dans laquelle l'unité de détection (5) est adaptée pour détecter des signaux optiques.

**Claims**

**1.** An imaging method comprising the following steps:

(a) for each of a set of areas to be observed of an observation region, and for an instant $\delta t$ of an observation period T, a measurement $F_0(x, y, \delta t)$ is provided of the detected signals (4) corresponding to a radiation emission originating from said area during the instant $\delta t$,

(b) on the one hand a first value $F_1(x, y, \delta t)$ is provided, termed "integration" value, being an estimation of the intensity of the detected signals originating from said area during the instant, and on the other hand a second value $F_2(x, y, \delta t)$ is provided, termed "count" value, being an estimate of the number of detected signals originating from said area during the instant, $F_2(x, y, \delta t)$ being obtained by assigning, for a set of contiguous areas where the measurement $F_0(x, y, \delta t)$ is non-zero forming a detection spot:

- one signal unit at the barycenter of said spot, and
- zero signal unit in the other areas of the spot,

(c) in at least one concerned area $(x_0, y_0)$ of said set of areas, a value $F_e(x_0, y_0, \delta t)$ of the number of signals in the concerned area during said instant is estimated from at least a combination of the first $F_1(x_0, y_0, \delta t)$ and second $F_2(x_0, y_0, \delta t)$ values,

in which, during the step (c), the following steps are implemented:

(c1) a neighborhood $R(x_0; y_0)$ is defined that forms a part of said set of areas, said neighborhood comprising at least the concerned area $(x_0, y_0)$ and neighboring areas $(x_1 ; y_1)$ distinct of the concerned area,

(c2) a criterion of detection in the neighborhood, indicative of a level of detection, is estimated based on measurements $F_0(x, y, \delta t)$ for neighboring areas $(x_1 ; y_1)$ included in said neighborhood $R(x_0; y_0)$ during the observation period T, and

(c3) the value $F_e(x_0, y_0, \delta t)$ of the number of signals is estimated according, in addition, to at least said criterion of detection in the neighborhood.

**2.** The imaging method as claimed in claim 1, in which:

- when the criterion of detection in the neighborhood indicates a low detection level, the value $F_e(x_0, y_0, \delta t)$ of the number of signals is estimated as the second value $F_2(x_0, y_0, \delta t)$,
- when the criterion of detection in the neighborhood indicates a high detection level, the value $F_e(x_0, y_0, \delta t)$ of the number of signals is estimated as the first value $F_1(x_0, y_0, \delta t)$.

**3.** The imaging method as claimed in claim 2, in which, when the criterion of detection in the neighborhood indicates an intermediate detection level between the low and high levels, the value $F_e(x_0, y_0, \delta t)$ of the number of signals is estimated as a combination of the first value $F_1(x_0, y_0, \delta t)$ and the second value $F_2(x_0, y_0, \delta t)$, each being weighted

by a non-zero coefficient.

4. The imaging method as claimed in claim 3, in which, when the criterion of detection in the neighborhood indicates said intermediate detection level, the value $F_e(x_0, y_0, \delta t)$ of the number of signals is estimated as a linear combination of the first value $F_1(x_0, y_0, \delta t)$ and the second value $F_2(x_0, y_0, \delta t)$ according to:

$$F_e(x_0, y_0, \delta t) = \alpha\ F_1(x_0, y_0, \delta t) + (1-\alpha)\ F_2(x_0, y_0, \delta t),$$

$\alpha$ being a coefficient in the range ]0; 1[ depending on the criterion of detection in the neighborhood, and optionally in which, for the area $(x_0 ; y_0)$ and the instant $\delta t$ concerned, $\alpha$ depends on the measurement $F_0(x_0, y_0, \delta t)$ in that area for that instant.

5. The method as claimed in any of the preceding claims, in which, during the step (c2), the criterion of detection in the neighborhood is estimated from at least the measurement $F_0(x, y, \delta t)$ for neighboring areas $(x_1 ; y_1)$ (included in said neighborhood $R(x_0; y_0)$ during the instant $\delta t$.

6. The imaging method as claimed in claim 5, in which the detection criterion relates to one of the following criteria :

- a number of areas $(x_1 ; y_1)$of said neighborhood in which the measurement $F_0(x, y, \delta t)$ is less than a predetermined threshold ;
- an average of the measurement $F_0(x, y, \delta t)$ in said neighborhood.

7. The imaging method as claimed in any preceding claim, in which the steps (a), (b) and (c) are implemented at least for a first instant $(\delta t_1)$ and a second instant $(\delta t_2)$ distinct from the first instant, and in which, for said first instant, said criterion of detection in the neighborhood is estimated at least from the measurements $F_0(x, y, \delta t_2)$ for neighboring areas $(x_1 ; y_1)$ included in said neighborhood $R(x_0; y_0)$ during the second instant $(\delta t_2)$.

8. The imaging method as claimed in any preceding claim, in which the step (c) is implemented in a plurality of concerned areas.

9. The imaging method as claimed in any preceding claim, in which, during the step (b), said first value $F_1(x, y, \delta t)$ is obtained according to said measurement $F_0(x, y, \delta t)$.

10. The imaging method as claimed in any preceding claim, in which, before the step (a), a step (z) is implemented during which, for each of a set of areas (x, y) to be observed of an observation region, and for an instant $\delta t$ of an observation period, a signal (4) is detected that corresponds to an emission of radiation, for example light, originating from said area during the instant $\delta t$, said detection providing said measurement $F_0(x, y, \delta t)$.

11. The method as claimed in any preceding claim, in which, during the step (c2), said criterion of detection in the neighborhood is estimated also from the measurement $F_0(x_0, y_0, \delta t)$ for the concerned area (x, y).

12. A computer program product comprising program code portions suitable for implementing a method as claimed in any of the preceding claims when said program is run on a programmable machine.

13. An imaging installation comprising:

(A) a memory (9) storing, for each of a set of areas ((x, y) to be observed of an observation region, and for an instant $\delta t$ of an observation period, a measurement $F_0(x, y, \delta t)$ of detected signals corresponding to an emission of radiation originating from said area during the instant $\delta t$,
(B) a computer (10) adapted to provide on the one hand a first value $F_1(x, y, \delta t)$, termed "integration" value, being an estimate of the intensity of the detected signals originating from said area during the instant, and on the other hand a second value $F_2(x, y, \delta t)$, termed "count" value, being an estimate of the number of detected signals originating from said area during the instant, $F_2(x, y, \delta t)$ being obtained by assigning, for a set of contiguous areas where the measurement $F_0(x, y, \delta t)$ is non-zero forming a detection spot:

- one signal unit at the barycenter of said spot, and

- zero signal units in the other areas of the spot,

said computer being adapted to estimate, in at least one concerned area $(x_0, y_0)$, chosen from said set of areas, a value $F_e(x_0, y_0, \delta t)$ of the number of signals in the concerned area $(x_0, y_0)$ during said instant from at least one combination of the first $F_1(x_0, y_0, \delta t)$ and second $F_2(x_0, y_0, \delta t)$ values,
the computer (10) being adapted to define a neighborhood $R(x_0; y_0)$ forming a part of said set of areas, said neighborhood comprising at least the concerned area $(x_0, y_0)$ and neighboring areas $(x_1, y_1)$ distinct from the concerned area,
the computer (10) being adapted to estimate a criterion of detection in the neighborhood, indicative of a level of detection, at least from the measurements $F_0(x, y, \delta t)$ for neighboring areas $((x_1, y_1)$ included in said neighborhood $R(x_0; y_0)$ during the observation period T, and
the computer (10) being adapted to estimate the value $F_e(x_0, y_0, \delta t)$ of the number of signals according, in addition, at least to said criterion of detection in the neighborhood.

14. The imaging installation as claimed in claim 13, also comprising a detection unit (5) adapted to detect signals that correspond to an emission of radiation originating from said area during the instant $\delta t$, and to store the corresponding measurement $F_0(x, y, \delta t)$ in said memory (9).

15. The imaging installation as claimed in claim 14, in which the detection unit (5) is adapted to detect optical signals.

**Patentansprüche**

1. Bildgebungsverfahren, umfassend die folgenden Schritte:

(a) man stellt für jede Zone einer Gesamtheit von zu beobachtenden Zonen (x; y) einer Beobachtungsregion und für einen Augenblick $\delta t$ eines Beobachtungszeitraums T ein Maß $F_0(x, y, \delta t)$ von detektierten Signalen (4) bereit, welche einer aus der besagten Zone während des Augenblicks $\delta t$ stammenden Strahlungsemission entsprechen,
(b) man stellt einerseits einen ersten Schätzwert $F_1(x, y, \delta t)$, der sogenannte "Wert durch Integration", der Intensität der detektierten, aus der besagten Zone während des Augenblicks stammenden Signale und andererseits einen zweiten, durch Zuordnung erhaltenen Schätzwert $F_2(x, y, \delta t)$, der sogenannte "Wert durch Zählung", der Anzahl der aus der besagten Zone während des Augenblicks stammenden Signale für eine Gesamtheit aneinandergrenzender Zonen bereit, wobei das Maß $F_0(x, y, \delta t)$ nicht null ist, indem eine Beobachtungsstelle gebildet wird:

- eine Signaleinheit im Schwerpunkt der besagten Stelle und
- null Signaleinheiten in anderen Zonen der Stelle,

(c) man berechnet in mindestens einer berücksichtigten Zone $(x_0; y_0)$ der besagten Gesamtheit von Zonen einen Wert $F_e(x_0, y_0, \delta t)$ der Anzahl der Signale in der berücksichtigten Zone $(x_0; y_0)$ während des besagten Augenblicks ausgehend von mindestens einer Kombination aus ersten $F_1(x_0, y_0, \delta t)$ und zweiten $F_2(x_0, y_0, \delta t)$ Werten, wobei man im Verlauf des Schritts (c) die folgenden Schritte ausführt:

(c1) man definiert eine Umgebung $R(x_0; y_0)$, die einen Teil der besagten Gesamtheit von Zonen bildet, wobei die besagte Umgebung mindestens die berücksichtigte Zone $(x_0; y_0)$ und Umgebungszonen $(x_1; y_1)$ enthält, die sich von der berücksichtigten Zone unterscheiden,
(c2) man berechnet im Verlauf des Beobachtungszeitraums T für die Umgebungszonen $(x_1; y_1)$, die in der besagten Umgebung $R(x_0; y_0)$ enthalten sind, ausgehend von den Maßen $F_0(x, y, \delta t)$ ein Detektionskriterium in der Umgebung, das ein Detektionsniveau anzeigt, und
(c3) man berechnet den Wert $F_e(x_0, y_0, \delta t)$ der Anzahl der Signale zudem als Funktion mindestens des besagten Detektionskriteriums in der Umgebung.

2. Bildgebungsverfahren gemäß Anspruch 1, bei dem:

- man den Wert $F_e(x_0, y_0, \delta t)$ der Anzahl der Signale wie den zweiten Wert $F_2(x_0, y_0, \delta t)$ bestimmt, wenn das Detektionskriterium in der Umgebung ein niedriges Detektionsniveau anzeigt,
- man den Wert $F_e(x_0, y_0, \delta t)$ der Anzahl der Signale wie den ersten Wert $F_1(x_0, y_0, \delta t)$ bestimmt, wenn das

Detektionskriterium in der Umgebung ein hohes Detektionsniveau anzeigt.

3. Bildgebungsverfahren gemäß Anspruch 2, bei dem man den Wert $F_e$ ($x_0$, $y_0$, $\delta t$) der Anzahl der Signale wie eine Kombination aus dem ersten Wert $F_1$ ($x_0$, $y_0$, $\delta t$) und dem zweiten Wert $F_2$ ($x_0$, $y_0$, $\delta t$) bestimmt, wenn das Detektionskriterium in der Umgebung ein Detektionsniveau anzeigt, das zwischen dem niedrigen und dem hohen Niveau liegt, wobei jeder Wert mittels eines Koeffizienten, der nicht null ist, gewichtet wird.

4. Bildgebungsverfahren gemäß Anspruch 3, bei dem man den Wert $F_e$ ($x_0$, $y_0$, $\delta t$) der Anzahl der Signale wie eine Linearkombination aus dem ersten Wert $F_1$ ($x_0$, $y_0$, $\delta t$) und dem zweiten Wert $F_2$ ($x_0$, $y_0$, $\delta t$) bestimmt, wenn das Detektionskriterium in der Umgebung das besagte dazwischenliegende Detektionsniveau anzeigt, gemäß:

$$F_e\ (x_0,\ y_0,\ \delta t) = \alpha\ F_1\ (x_0,\ y_0,\ \delta t) + (1-\alpha)\ F_2\ (x_0,\ y_0,\ \delta t),$$

wobei $\alpha$ ein im Intervall $]0;1[$ enthaltener, vom Detektionskriterium in der Umgebung abhängiger Koeffizient ist, und bei dem $\alpha$ optional für die Zone ($x_0$, $y_0$) und den berücksichtigten Augenblick $\delta t$ von dem Maß $F_0$ ($x_0$, $y_0$, $\delta t$) in dieser Zone für diesen Augenblick abhängt.

5. Verfahren gemäß einem der vorhergehenden Ansprüche, bei dem man im Verlauf des Schritts (c2) das Detektionskriterium in der Umgebung ausgehend zumindest von dem Maß $F_0$ ($x$, $y$, $\delta t$) für die Umgebungszonen ($x_1$; $y_1$), die in der besagten Umgebung R ($x_0$; $y_0$) im Verlauf des Augenblicks $\delta t$ enthalten sind, berechnet.

6. Bildgebungsverfahren gemäß Anspruch 5, bei dem das Detektionskriterium auf eines der nachfolgenden Kriterien bezogen ist:

   - eine Anzahl von Zonen ($x_1$; $y_1$) der besagten Umgebung, in welchen das Maß $F_0$ ($x$, $y$, $\delta t$) kleiner ist als eine vorbestimmte Schwelle,
   - einen Mittelwert des Maßes $F_0$ ($x$, $y$, $\delta t$) in der besagten Umgebung.

7. Bildgebungsverfahren gemäß einem der vorhergehenden Ansprüche, bei dem die Schritte (a), (b) und (c) zumindest für einen ersten Augenblick ($\delta t_1$) und einen vom ersten Augenblick unterschiedlichen zweiten Augenblick ($\delta t_2$) ausgeführt werden und bei dem man das besagte Detektionskriterium in der Umgebung für den besagten ersten Augenblick zumindest ausgehend von den Maßen $F_0$ ($x$, $y$, $\delta t_2$) für die Umgebungszonen ($x_1$; $y_1$) berechnet, die in der besagten Umgebung R ($x_0$; $y_0$) im Verlauf des zweiten Augenblicks ($\delta t_2$) enthalten sind.

8. Bildgebungsverfahren gemäß einem der vorhergehenden Ansprüche, bei dem der Schritt (c) in einer Vielzahl der berücksichtigten Zonen ausgeführt wird.

9. Bildgebungsverfahren gemäß einem der vorhergehenden Ansprüche, bei dem man im Verlauf des Schritts (b) den besagten ersten Wert $F_1$ ($x$, $y$, $\delta t$) als Funktion des besagten Maßes $F_0$ ($x$, $y$, $\delta t$) erhält.

10. Bildgebungsverfahren gemäß einem der vorhergehenden Ansprüche, bei dem man vor dem Schritt (a) einen Schritt (z) ausführt, in dessen Verlauf man für jede Zone einer Gesamtheit von zu beobachtenden Zonen ($x$; $y$) einer Beobachtungsregion und für einen Augenblick $\delta t$ eines Beobachtungszeitraums ein Signal (4) detektiert, das einer Strahlungsemission entspricht, beispielsweise einer Lichtstrahlung, die aus der besagten Zone während des Augenblicks $\delta t$ stammt, wobei die besagte Detektion das besagte Maß $F_0$ ($x$, $y$, $\delta t$) hervorbringt.

11. Verfahren nach einem beliebigen der vorhergehenden Ansprüche, bei dem man im Verlauf des Schritts (c2) das besagte Detektionskriterium in der Umgebung zudem ausgehend von dem Maß $F_0$ ($x_0$, $y_0$, $\delta t$) für die berücksichtigte Zone ($x_0$; $y_0$) berechnet.

12. Computerprogrammprodukt, enthaltend Programmcodeabschnitte, die zur Ausführung eines Verfahrens gemäß einem beliebigen der vorhergehenden Ansprüche angepasst sind, wenn das besagte Programm auf einer programmierbaren Maschine ausgeführt wird.

13. Bildgebungseinrichtung, enthaltend:

(A) einen Speicher (9), der für jede Zone einer Gesamtheit von zu beobachtenden Zonen (x; y) einer Beobachtungsregion und für einen Augenblick $\delta t$ eines Beobachtungszeitraums ein Maß $F_0$ (x, y, $\delta t$) von detektierten Signalen speichert, welche einer aus der besagten Zone während des Augenblicks $\delta t$ stammenden Strahlungsemission entsprechen,

(B) einen Rechner (10), der zur Bereitstellung einerseits eines ersten Schätzwerts $F_1$ (x, y, $\delta t$), des sogenannten "Werts durch Integration", der Intensität der detektierten, aus der besagten Zone während des Augenblicks stammenden Signale und andererseits eines zweiten, durch Zuordnung erhaltenen Schätzwertes $F_2$ (x, y, $\delta t$), des sogenannten "Werts durch Zählung", der Anzahl der aus der besagten Zone während des Augenblicks stammenden Signale für eine Gesamtheit aneinandergrenzender Zonen angepasst ist, wobei das Maß $F_0$ (x, y, $\delta t$) nicht null ist, indem eine Beobachtungsstelle gebildet wird:

- eine Signaleinheit im Schwerpunkt der besagten Stelle und
- null Signaleinheiten in anderen Zonen der Stelle,

wobei der Rechner (10) dazu angepasst ist, in mindestens einer berücksichtigten Zone ($x_0$; $y_0$), die aus der besagten Gesamtheit von Zonen ausgewählt ist, einen Wert $F_e$ ($x_0$, $y_0$, $\delta t$) der Anzahl der Signale in der berücksichtigten Zone ($x_0$; $y_0$) während des besagten Augenblicks ausgehend von mindestens einer Kombination aus ersten $F_1$ ($x_0$, $y_0$, $\delta t$) und zweiten $F_2$ ($x_0$, $y_0$, $\delta t$) Werten zu berechnen,

wobei der Rechner (10) dazu angepasst ist, eine Umgebung R ($x_0$; $y_0$) zu definieren, die einen Teil der besagten Gesamtheit von Zonen bildet, wobei die besagte Umgebung mindestens die berücksichtigte Zone ($x_0$; $y_0$) und Umgebungszonen ($x_1$; $y_1$) enthält, die sich von der berücksichtigten Zone unterscheiden,

wobei der Rechner (10) dazu angepasst ist, im Verlauf des Beobachtungszeitraums T für die Umgebungszonen ($x_1$; $y_1$), die in der besagten Umgebung R ($x_0$; $y_0$) enthalten sind, ausgehend von den Maßen $F_0$ (x, y, $\delta t$) ein Detektionskriterium in der Umgebung zu berechnen, das ein Detektionsniveau anzeigt, und

wobei der Rechner (10) dazu angepasst ist, den Wert $F_e$ ($x_0$, $y_0$, $\delta t$) der Anzahl der Signale zudem als Funktion zumindest des besagten Detektionskriteriums in der Umgebung zu berechnen.

**14.** Bildgebungseinrichtung gemäß Anspruch 13, ferner enthaltend eine Detektionseinheit (5), die zur Detektion von Signalen, welche einer aus der besagten Zone während des Augenblicks $\delta t$ stammenden Strahlungsemission entsprechen, und zur Speicherung des entsprechenden Maßes $F_0$ (x, y, $\delta t$) im besagten Speicher (9) angepasst ist.

**15.** Bildgebungseinrichtung gemäß Anspruch 14, bei der die Detektionseinheit (5) zur Detektion von optischen Signalen angepasst ist.

FIG.1.

FIG.2.

$F_0(x,y,\delta t)$

$F_1(x,y,\delta t)$

$F_2(x,v,\delta t)$

R(x₀;y₀)

R(x₀;y₀)

FIG.3.

C(x₀;y₀)

Fe = F₁

Fe = F₂

$$F_e = \alpha(C)F_1 + (1-\alpha(C))F_2$$

FIG.4b.

FIG.4a.

**EP 2 097 870 B1**

**RÉFÉRENCES CITÉES DANS LA DESCRIPTION**

**Documents brevets cités dans la description**

- GB 2350187 A